# EUROPEAN PATENT SPECIFICATION

(11) **EP 2 533 501 B1**
(45) Date of publication and mention of the grant of the patent: **26.10.2016**
(21) Application number: 10849306.5
(22) Date of filing: 18.11.2010
(51) Int. Cl.: H04M 1/02, G06F 1/16

(54) **METHOD FOR HORIZONTAL AND VERTICAL SCREEN SWITCHING OF TOUCH SCREEN OF MOBILE TERMINAL AND MOBILE TERMINAL THEREOF**
VERFAHREN FÜR HORZIONTALEN UND VERTIKALEN BILDSCHIRMWECHSEL BEI EINEM BERÜHRUNGSBILDSCHIRM EINES MOBILEN ENDGERÄTS UND MOBILES ENDGERÄT DAFÜR
PROCÉDÉ POUR UNE PERMUTATION D'ÉCRAN ENTRE DES MODES HORIZONTAL ET VERTICAL DE L'ÉCRAN TACTILE D'UN TERMINAL MOBILE ET TERMINAL MOBILE CORRESPONDANT

(30) Priority: 08.04.2010 CN 201010144597
(43) Date of publication of application: 12.12.2012
(73) Proprietor: Huawei Device Co., Ltd., Shenzhen, Guangdong 518129 (CN)
(72) Inventor: CHEN, Lei, Shenzhen Guangdong 518129 (CN)
(74) Representative: Schmitz, Alexander
(86) International application number: PCT/CN2010/078864
(87) International publication number: WO 2011/124070

(56) References cited:
- EP-A1- 2 144 135
- CA-A1- 2 681 856
- CN-A- 101 030 982
- CN-A- 101 184 298
- CN-A- 101 257 532
- CN-A- 101 478 581
- CN-A- 101 616 210
- CN-A- 101 800 816
- JP-A- 2006 135 794
- JP-A- 2008 065 585
- JP-A- 2008 131 616
- US-A1- 2003 085 870
- US-A1- 2009 137 286
- US-A1- 2009 298 550

## Description

### FIELD OF THE INVENTION

The present invention relates to the field of mobile terminal technologies, and in particular, to a method for switching the touch screen of a mobile terminal between a horizontal screen and a vertical screen and a mobile terminal.

### BACKGROUND OF THE INVENTION

Capacitive touch screens are extensively used in mobile terminals, and especially in high-end mobile terminals.

The capacitive touch screen uses conductivity of the human body. When a finger touches the screen, a part of charges are absorbed from the capacitive touch screen. The distance between a touch point and four corners of a square touch screen determines how many charges are absorbed from the four corners. The longer the distance is, the fewer charges are absorbed; the shorter the distance is, the more charges are absorbed. Therefore, the specific position of the touch point is obtained by judging the distance between the touch point and the four corners. In addition, multipoint touching may be implemented on this capacitive touch screen, that is, if multiple points on the screen are touched at the same time, the device can determine the positions of the touch points.

The high-end mobile terminals using this capacitive touch screen have fewer and fewer buttons and even have no ordinary buttons. Seen from a front face, a high-end mobile terminal is basically a large mirror, and a touch screen almost occupies the whole area.

With the development of technologies, a gravity sensing chip is added to the high-end mobile terminal to implement automatic switching between a horizontal screen and a vertical screen. The mobile terminal calculates the current placement form of the mobile terminal by using the gravity sensing chip to determine whether to display a screen in the form of a horizontal screen or vertical screen.

The prior art has at least the following problems: the flexibility of the switching between a horizontal screen and a vertical screen is poor; for example, when a user lies on one side, the mobile terminal calculates, by using the gravity sensing chip, that the mobile terminal is placed horizontally, and then displays the screen in the form of a horizontal screen. Therefore, the switching between a horizontal screen and a vertical screen fails to meet requirements.

CA 2681856 A1 discloses a method of rendering a graphical user interface (GUI) on a portable electronic device, comprises: the device selects and updates the screen orientation of the GUI presented within the touch screen of the device in accordance with the preferred screen orientation.

US 2003/085870 A1 discloses a method of changing the orientation of images on a device's display detects movement followed by an end of movement of the device. The orientation of the device is then determined and is used to set the orientation of images on the display. In some embodiments, the tilt sensor is used to detect the orientation of the mobile device so that the image on the display of the mobile device may be matched to the mobile device orientation.

### SUMMARY OF THE INVENTION

Embodiments of the present invention provide a method for switching the touch screen of a mobile terminal between a horizontal screen and a vertical screen and a mobile terminal, so as to increase the flexibility of the switching between a horizontal screen and a vertical screen.

An embodiment of the present invention provides a method for switching the touch screen of a mobile terminal between a horizontal screen and a vertical screen, including:
according to a value of the acceleration of gravity in a direction vertical to the screen of the mobile terminal, determining whether the operation mode of the mobile terminal is a normal operation mode or a recumbent operation mode; the normal operation mode is a mode in which the value of the acceleration of gravity in the direction vertical to the screen of the mobile terminal is smaller than 0, and the recumbent operation mode as a mode in which the value of the acceleration of gravity in the direction vertical to the screen of the mobile terminal is greater than or equal to 0;
determining, according to a determined operation mode, a criterion for switching between a horizontal screen and a vertical screen; and
performing the switching between a horizontal screen and a vertical screen according to the criterion;
wherein the determining, according to a determined operation mode, a criterion for switching between a horizontal screen and a vertical screen comprises:
   if the operation mode is a recumbent operation mode, determining that the criterion for switching between a horizontal screen and a vertical screen is a criterion in the recumbent operation mode;
   wherein the performing the switching between a horizontal screen and a vertical screen according to the criterion comprises:
      if a value of the acceleration of gravity of the mobile terminal in the direction of width and a value of the acceleration of gravity in the direction of length are small, and if an angle between a direction of width of the mobile terminal and a horizontal plane is greater than a preset angle and an angle between a direction of length of the mobile terminal and the horizontal plane is close to 0, switching a display screen of the mobile terminal to the horizontal screen;
      if a value of the acceleration of gravity of the mobile terminal in the direction of width and a value of the acceleration of gravity in the direction of length are small, and if the angle between the direction of length of the mobile terminal and the horizontal plane is greater than a preset angle and the angle between the direction of width of the mobile terminal and the horizontal plane is close to 0, switching the display screen of the mobile terminal to the vertical screen;
      if a value of the acceleration of gravity of the mobile terminal in the direction of width is close to 0 and a value of the acceleration of gravity in the direction of length is close to -9.8, switching the display screen of the mobile terminal to the horizontal screen;
      if the value of the acceleration of gravity of the mobile terminal in the direction of length is close to 0 and the value of the acceleration of gravity in the direction of width is close to 9.8, switching the display screen of the mobile terminal to the vertical screen;
      if the value of the acceleration of gravity of the mobile terminal in the direction of width is close to 0 and the value of the acceleration of gravity in the direction of length is close to 9.8, switching the display screen of the mobile terminal to the horizontal screen; and
      if the value of the acceleration of gravity of the mobile terminal in the direction of length is close to 0 and the value of the acceleration of gravity in the direction of width is close to -9.8, switching the display screen of the mobile terminal to the vertical screen.

An embodiment of the present invention also provides a mobile terminal, including:
an operation mode determining module, configured to: according to the value of acceleration of gravity in a direction vertical to the screen of the mobile terminal, determine whether the operation mode of the mobile terminal is a normal operation mode or a recumbent operation mode; the normal operation mode is a mode in which the value of the acceleration of gravity in the direction vertical to the screen of the mobile terminal is smaller than 0, and the recumbent operation mode as a mode in which the value of the acceleration of gravity in the direction vertical to the screen of the mobile terminal is greater than or equal to 0;
a switching criterion determining module, configured to determine, according to a determined operation mode, a criterion for switching between horizontal screen and vertical screen; and
a switching module, configured to perform the switching between horizontal screen and vertical screen according to the criterion;
wherein the switching criterion determining module is configured to: if the operation mode is a recumbent operation mode, determine that the criterion for switching between a horizontal screen and a vertical screen is a criterion in the recumbent operation mode;
wherein the switching module is configured to:
   if a value of the acceleration of gravity of the mobile terminal in the direction of width and a value of the acceleration of gravity in the direction of length are small, and if an angle between a direction of width of the mobile terminal and a horizontal plane is greater than a preset angle and an angle between a direction of length of the mobile terminal and the horizontal plane is close 0, switch a display screen of the mobile terminal to the horizontal screen; and
   if a value of the acceleration of gravity of the mobile terminal in the direction of width and a value of the acceleration of gravity in the direction of length are small, and if the angle between the direction of length of the mobile terminal and the horizontal plane is greater than a preset angle and the angle between the direction of width of the mobile terminal and the horizontal plane is close to 0, switch the display screen of the mobile terminal to the vertical screen;
   if a value of the acceleration of gravity of the mobile terminal in the direction of width is close to 0 and a value of the acceleration of gravity in the direction of length is close to -9.8, switch the display screen of the mobile terminal to the horizontal screen;
   if the value of the acceleration of gravity of the mobile terminal in the direction of length is close to 0 and the value of the acceleration of gravity in the direction of width is close to 9.8, switch the display screen of the mobile terminal to the vertical screen;
   if the value of the acceleration of gravity of the mobile terminal in the direction of width is close to 0 and the value of the acceleration of gravity in the direction of length is close to 9.8, switch the display screen of the mobile terminal to the horizontal screen; and
   if the value of the acceleration of gravity of the mobile terminal in the direction of length is close to 0 and the value of the acceleration of gravity in the direction of width is close to -9.8, switch the display screen of the mobile terminal to the vertical screen.

According to the technical solutions provided in the above embodiments of the present invention, the operation mode of the mobile terminal is determined, and a criterion for switching between a horizontal screen and a vertical screen is determined according to the operation mode, which solves the problem that the switching between a horizontal screen and a vertical screen cannot meet requirements when a user lies on one side, thus increasing the flexibility of the switching between a horizontal screen and a vertical screen.

### BRIEF DESCRIPTION OF THE DRAWINGS

To illustrate the technical solutions of the present invention, the accompanying drawings for describing the embodiments of the present invention are briefly introduced in the following. Obviously, the accompanying drawings are merely exemplary embodiments, and persons skilled in the art may derive other embodiments from the accompanying drawings.
FIG. 1 is a flowchart of a method for switching the touch screen of a mobile terminal between a horizontal screen and a vertical screen according to an embodiment of the present invention;
FIG. 2 is a schematic diagram illustrating the principle of a three-axis gravity sensing chip in a method for switching the touch screen of a mobile terminal between a horizontal screen and a vertical screen according to an embodiment of the present invention;
FIG. 3 is a schematic diagram of holding areas in a method for switching the touch screen of a mobile terminal between a horizontal screen and a vertical screen according to an embodiment of the present invention; and
FIG. 4 is a schematic structural diagram of a mobile terminal according to an embodiment of the present invention.

### DETAILED DESCRIPTION OF THE EMBODIMENTS

The technical solutions of the embodiments of the present invention are hereinafter described with reference to the accompanying drawings in the embodiments of the present invention. The described embodiments are only some exemplary embodiments of the present invention, rather than all embodiments of the present invention. All other embodiments obtained by persons skilled in the art based on the embodiments of the present invention shall fall within the protection scope of the present invention.

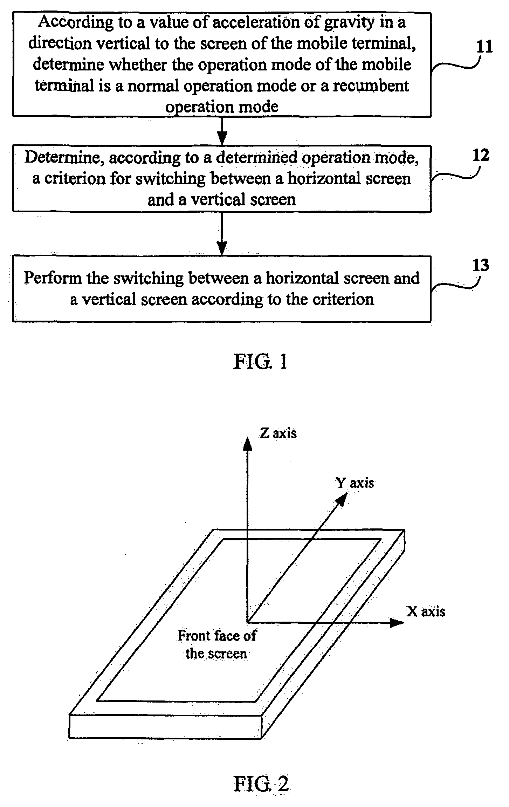

FIG. 1 is a flowchart of a method for switching the touch screen of a mobile terminal between a horizontal screen and a vertical screen according to an embodiment of the present invention. The method includes:
Step 11: According to a value of the acceleration of gravity in a direction vertical to the screen of the mobile terminal, determine whether the operation mode of the mobile terminal is a normal operation mode or a recumbent operation mode.

For example, if the value of the acceleration of gravity in the direction vertical to the screen of the mobile terminal is smaller than 0, the operation mode of the mobile terminal is determined to be the normal operation mode; if the value of the acceleration of gravity in the direction vertical to the screen of the mobile terminal is greater than or equal to 0, the operation mode of the mobile terminal is determined to be the recumbent operation mode.

The principle of a three-axis gravity sensing chip used in a mobile terminal, for example, a handset, is shown in FIG. 2, where the gravity in the X axis, Y axis, and Z axis is determined. The X axis and Y axis are parallel with the plane of the handset. The X axis refers to the direction of width of the mobile terminal, the Y axis refers to the direction of length of the mobile terminal, and the Z axis is vertical to the plane of the handset, that is, the Z axis refers to a direction vertical to the screen of the mobile terminal. When the handset is placed horizontally with a front face up, the values of the acceleration of gravity reported in the X axis, Y axis, and Z axis are 0, 0, and -9.8 (the acceleration of gravity is 9.8) respectively. When the handset is overturned, the data of the X axis, Y axis, and Z axis may change accordingly.

In this embodiment, the operation mode of the mobile terminal is divided into the normal operation mode and the recumbent operation mode to meet requirements for the switching between a horizontal screen and a vertical screen in more operation scenarios, thus increasing the flexibility of the switching between a horizontal screen and a vertical screen.

The normal operation mode means that a user uses the mobile terminal when the user sits down or stands. In the normal operation mode, the user overlooks the screen of the mobile terminal, the screen faces up, and the value of the Z axis is negative, that is, smaller than 0. The recumbent operation mode means that the user uses the mobile terminal when the user lies down. In this mode, three cases are involved: the user uses the mobile terminal when lying on the back, the user uses the mobile terminal when lying on the left side, and the user uses the mobile terminal when lying on the right side. If the user uses the mobile terminal when lying on the back, the screen of the handset faces down, and the value of the Z axis is positive, that is, greater than 0; if the user uses the mobile terminal when lying on the left side or on the right side, the screen of the handset is basically parallel with a vertical direction, and the value of the Z axis is close to 0.

Therefore, before whether the screen of the mobile terminal is a horizontal screen or a vertical screen is determined, whether a current mode is the normal operation mode or the recumbent operation mode is determined. Specifically, if the value of the Z axis is negative, and the angle between the Z axis and the vertical direction is smaller than a threshold angle, for example, 45 degrees, that is, the mobile terminal is basically in a face-up holding manner a current operation mode is determined to be the normal operation mode; if the value of the Z axis is positive and the angle between the Z axis and the vertical direction is smaller than a threshold angle, for example, 45 degrees, the current mode is determined to be the recumbent operation mode. The threshold angle is set to avoid the triggering of the switching between modes continuously in a critical case. A wide intermediate transition zone is set. In this transition zone, no mode switching is performed, and a previous mode is maintained.

Step 12: Determine, according to a determined operation mode, a criterion for switching between a horizontal screen and a vertical screen.

When the operation mode of the mobile terminal is determined to be the normal operation mode, an ordinary criterion for switching between a horizontal screen and a vertical screen is used. That is, the criterion for the vertical screen is as follows: the value of the X axis is close to 0, and the value of the Y axis is greater than a threshold value, for example δ. The criterion for the horizontal screen is as follows: the value of the Y axis is close to 0, and the value of the X axis is greater than a threshold value, for example δ. The switching between horizontal screen and vertical screen is performed when related angle requirements are met, and a previous screen mode of a horizontal screen or a vertical screen is maintained in other cases.

If the operation mode is the recumbent operation mode, the criterion for switching between a horizontal screen and a vertical screen is determined to be a criterion in the recumbent operation mode. Specifically, the recumbent operation mode may be further divided into lying on the back, lying on the right side, and lying on the left side. The features in the case of lying on the back are as follows: the values of the X axis and the Y axis are relatively small, and the handset is held with the face down. In this case, the switching between a horizontal screen and a vertical screen may be performed according to the specific values of the X axis and the Y axis. For example, if the angle between the X axis and a horizontal plane is greater than 30 degrees (the angle may be adjusted freely) and the Y axis is closer to 0, the screen mode of the mobile terminal is switched to the horizontal screen; if the angle between the Y axis and the horizontal plane is greater than 30 degrees and the X axis is closer to 0, the screen mode of the mobile terminal is switched to the vertical screen.

In the case of lying on the right side, the criterion for the horizontal screen is as follows: the Y axis is closer to a -G value (-9.8), and the X axis is closer to 0; the criterion for the vertical screen is as follows: the X axis is close to a G value, and the Y axis is close to 0.

In the case of lying on the left side, the criterion for the horizontal screen is as follows: the Y axis is closer to a G value, and the X axis is closer to 0; the criterion for the vertical screen is as follows: the X axis is close to a -G value, and the Y axis is close to 0.

Step 13: Perform the switching between a horizontal screen and a vertical screen according to the criterion. Specifically, if the value of the acceleration of gravity of the mobile terminal in an X axis direction is close to 0 and the value of the acceleration of gravity of the mobile terminal in a Y axis direction is -9.8, the display screen of the mobile terminal is switched to the horizontal screen; if the value of the acceleration of gravity of the mobile terminal in the Y axis direction is close to 0 and the value of the acceleration of gravity of the mobile terminal in the X axis direction is 9.8, the display screen of the mobile terminal is switched to the vertical screen; if the value of the acceleration of gravity of the mobile terminal in the X axis direction is close to 0 and the value of the acceleration of gravity of the mobile terminal in the Y axis direction is 9.8, the display screen of the mobile terminal is switched to the horizontal screen; if the value of the acceleration of gravity of the mobile terminal in the Y axis direction is close to 0 and the value of the acceleration of gravity of the mobile terminal in the X axis direction is -9.8, the display screen of the mobile terminal is switched to the vertical screen.

According to the technical solution provided in this embodiment, in view of the fact that the holding positions of the handset in some states are nearly the same in the recumbent operation mode and the normal operation mode, whether the current mode of the mobile terminal is the normal operation mode or the recumbent operation mode may be determined first. In this way, a previous operation mode is maintained unless the operation mode of the mobile terminal is changed to meet the criterion for another operation mode. For example, the criterion for the recumbent operation mode is that the Z axis is positive and that the angle between the Z axis and the vertical direction is smaller than a threshold angle, for example, 45 degrees. Therefore, if the current operation mode of the mobile terminal is the recumbent operation mode, the mobile terminal maintains the recumbent operation mode unless the criterion for the normal operation mode is met, that is, the Z axis is negative and the angle between the Z axis and the vertical direction is smaller than a threshold angle, for example, 45 degrees, or the mobile terminal is close to the face-up holding mode. Therefore, if a user wants to use the mobile terminal in the case of lying on one side, the user may turn down the screen of the mobile terminal, and then use the mobile terminal after the mobile terminal is switched to the recumbent operation mode. In this way, it is ensured that the user's requirement for using the vertical screen can still be met when the user lies on one side, thus avoiding a conflict with the requirement for using the horizontal screen in the normal operation mode and increasing the flexibility of the switching between a horizontal screen and a vertical screen.

If the operation mode of the mobile terminal is determined to be the recumbent operation mode, the method for switching the touch screen of a mobile terminal between a horizontal screen and a vertical screen according to an embodiment of the present invention further includes:
displaying a holding area on the touch screen of the mobile terminal, where the number of the holding area is one or above.

When the current mode of the mobile terminal is determined to be the recumbent operation mode, the front face of the screen of the mobile terminal is close to facing down vertically, so that it is hard for the user to operate the mobile terminal with a single hand. In this case, a holding point or a holding area is displayed as a dotted box on the screen of the mobile terminal, which ensures that the user holds the mobile terminal conveniently and does not trigger other processing operations of the touch screen. The mobile terminal maintains a previous state, without affecting other normal processing operations of the touch screen.

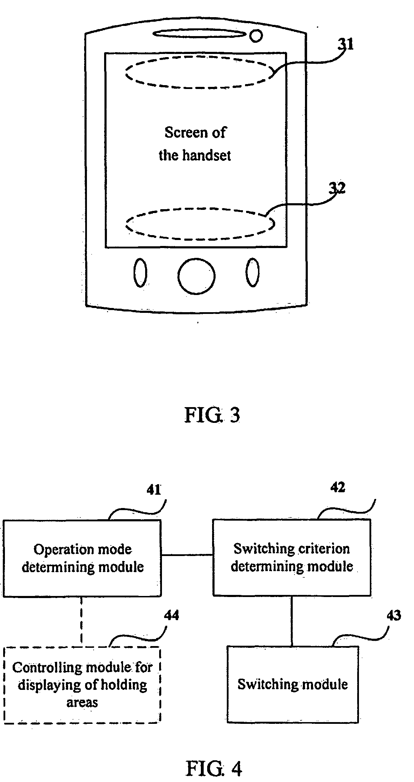

The displaying a holding area on the touch screen of the mobile terminal may include:
displaying multiple holding areas on the touch screen of the mobile terminal, so that the user may choose an area to hold. That is, the screen of the mobile terminal may provide multiple holding areas. As shown in FIG. 3, the screen of the handset displays a first area 31 and a second area 32, and the user may choose to hold either one of the two areas. If the user wants to operate the icon in the second area 32, the user may switch to hold the first area by using the multipoint touch function of a capacitive touch screen.

If there are multiple holding areas and any one of the holding areas is not held by the user, the mobile terminal displays all holding areas; if there are multiple holding areas and any one of the holding areas is held by the user, the mobile terminal stops displaying other areas not held by the user.

The specific process of displaying the holding area shown in FIG. 3 by the handset may include: after determining that the current operation mode of the handset is the recumbent operation mode, adding holding points to help the user to hold the handset, and displaying optional holding areas on the screen of the handset. The holding areas may be set according to an actual situation, for example, the structure and shape of the handset, and the convenience of holding the handset by the user.

After the user holds one of the multiple holding areas, the method for switching the touch screen of the mobile terminal between a horizontal screen and a vertical screen according to an embodiment of the present invention may further include:
stopping displaying other areas of the multiple holding areas. That is, when the user touches the holding area with a finger and holds the handset, the handset software determines, according to the position of the touch point, that the user touches the holding area, and thus ignores a touch screen event. In addition, the dotted lines of other holding areas displayed on the screen disappear. When the user uses another finger to operate positions other than the holding area on the touch screen, handset software determines that the touch screen event is an event triggered by a second point, and processes the event according to a normal case.

After the user's finger leaves the holding area, the method for switching the touch screen of the mobile terminal between a horizontal screen and a vertical screen according to an embodiment of the present invention may further include:
re-displaying other areas of the multiple holding areas. That is, if the user's finger leaves the touch screen, the dotted lines of the touch areas shown in FIG. 3 appears again, so that the user may change a holding area.

The area held by the user among the multiple holding areas may move along with the movement of the position held by the user. That is, after the user holds an area, the user may drag the area freely to a position desired by the user.

FIG. 4 is a schematic structural diagram of a mobile terminal according to an embodiment of the present invention. The mobile terminal includes an operation mode determining module 41, a switching criterion determining module 42, and a switching module 43. The operation mode determining module 41 is configured to: according to the value of acceleration of gravity in a direction vertical to the screen of the mobile terminal, determine whether the operation mode of the mobile terminal is a normal operation mode or a recumbent operation mode. For example, the operation mode determining module 41 may be configured to: if the operation mode is the recumbent operation mode, determine that the criterion for the switching between a horizontal screen and a vertical screen is a criterion in the recumbent operation mode. The switching criterion determining module 42 is configured to determine, according to a determined operation mode, a criterion for switching between a horizontal screen and a vertical screen. For example, the switching criterion determining module 42 may be configured to: if the operation mode is the recumbent operation mode, determine that the criterion for the switching between a horizontal screen and a vertical screen is a criterion in the recumbent operation mode. Details are disclosed in the above step 12. The switching module 43 is configured to perform the switching between a horizontal screen and a vertical screen according to the criterion. For example, the switching module 43 is configured to: if the angle between the direction of width of the mobile terminal and a horizontal plane is greater than a preset angle and the angle between the direction of length of the mobile terminal and the horizontal plane is close to 0, switch the display screen of the mobile terminal to the horizontal screen; if the angle between the direction of length of the mobile terminal and the horizontal plane is greater than a preset angle and the angle between the direction of width of the mobile terminal and the horizontal plane is close to 0, switch the display screen of the mobile terminal to the vertical screen; if the value of the acceleration of gravity of the mobile terminal in the direction of width is close to 0 and the value of the acceleration of gravity of the mobile terminal in the direction of length is close to -9.8, switch the display screen of the mobile terminal to the horizontal screen; if the value of the acceleration of gravity of the mobile terminal in the direction of length is close to 0 and the value of the acceleration of gravity of the mobile terminal in the direction of width is close to 9.8, switch the display screen of the mobile terminal to the vertical screen; if the value of the acceleration of gravity of the mobile terminal in the direction of width is close to 0 and the value of the acceleration of gravity of the mobile terminal in the direction of length is close to 9.8, switch the display screen of the mobile terminal to the horizontal screen; if the value of the acceleration of gravity of the mobile terminal in the direction of length is close to 0 and the value of the acceleration of gravity of the mobile terminal in the direction of width is close to -9.8, switch the display screen of the mobile terminal to the vertical screen.

In this embodiment, the mobile terminal determines the operation mode of the mobile terminal, and determines, according to the operation mode, a criterion for the switching between a horizontal screen and a vertical screen, which solves the problem that the user's requirement for switching between a horizontal screen and a vertical screen cannot be met when the user lies on one side, thus increasing the flexibility of the switching between a horizontal screen and a vertical screen.

The mobile terminal provided in this embodiment of the present invention may further include a controlling module 44 for displaying of a holding area. The controlling module 44 for displaying of a holding area is configured to: if the operation mode determining module determines that the operation mode of the mobile terminal is the recumbent operation mode, display a holding area on the touch screen of the mobile terminal, where the number of the holding area is one or above.

The controlling module 44 for displaying of a holding area may include a first submodule of the controlling module for displaying of a holding area, configured to: when there are multiple holding areas and any one of the holding areas is not held by a user, display all holding areas; when there are multiple holding areas and any one of the holding areas is held, stop displaying the holding areas not held by the user.

The controlling module 44 for displaying of a holding area may include a second submodule of the controlling module for displaying of a holding area, configured to control an area held by the user among the multiple holding areas to move along with the movement of the position held by the user. That is, after the user holds an area, the user may drag the area freely to a position desired by the user.

In the above method and terminal provided in embodiments of the present invention, the operation mode of the mobile terminal is differentiated, which solves the problem of the prior art where the requirement of a user for switching between a horizontal screen and a vertical screen cannot be met when the user lies on the back. For example, when the user uses the handset in the case of lying on the right side, the actual state of the handset is like the state of the handset held vertically by the user in the case of standing (or sitting down). Whether the operation mode of the mobile terminal is a recumbent operation mode is determined first, which solves the problem that the user's requirement for using the horizontal screen cannot be met when the handset is automatically switched to the vertical screen. Furthermore, the holding area is displayed, which solves the problem that it is hard for the user to operate the handset with a single hand due to the lack of an effective holding position of a large touch-screen handset when the user lies on the back. Because the front face of the handset is almost covered by the touch screen entirely, the gravity of the handset may be placed in the center of a hand in the normal operation mode, which facilitates the holding of the handset. However, in the recumbent operation mode, the handset can only be held by using the four sides of the handset, which brings about inconvenience to a single-hand operation on the handset. If a support point is added to the front face of the handset, the touch screen may be wrongly triggered and a misoperation may occur. Displaying the holding area on the screen ensures that the user can still hold the handset effectively when the user lies on the back, which avoids misoperations due to improper holding of the handset.

Those skilled in the art may understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium capable of storing program codes, such as a ROM, a RAM, a magnetic disk, or a CD-ROM.

## Claims

1. A method for switching a touch screen of a mobile terminal between a landscape orientation and a portrait orientation, comprising:
according to a value of acceleration of gravity in a direction perpendicular to a screen of the mobile terminal, determining (11) whether an operation mode of the mobile terminal is a normal operation mode or a recumbent operation mode; the normal operation mode is a mode in which the value of the acceleration of gravity in the direction vertical to the screen of the mobile terminal is smaller than 0, and the recumbent operation mode as a mode in which the value of the acceleration of gravity in the direction vertical to the screen of the mobile terminal is greater than or equal to 0; the method is further **characterized in**:
determining (12), according to a determined operation mode, a criterion for switching between a landscape orientation and a portrait orientation; and
performing (13) the switching between a landscape orientation and a portrait orientation according to the criterion;
wherein the determining, according to a determined operation mode, a criterion for switching between a landscape orientation and a portrait orientation comprises:
if the operation mode is the recumbent operation mode, determining that the criterion for switching between a landscape orientation and a portrait orientation is a criterion in the recumbent operation mode;
wherein the performing the switching between a landscape orientation and a portrait orientation according to the criterion comprises:
if a value of the acceleration of gravity of the mobile terminal in the direction of width and a value of the acceleration of gravity in the direction of length are small, and if an angle between a direction of width of the mobile terminal and a horizontal plane is greater than a preset angle and an angle between a direction of length of the mobile terminal and the horizontal plane is close to 0, switching a display screen of the mobile terminal to the landscape orientation;
if a value of the acceleration of gravity of the mobile terminal in the direction of width and a value of the acceleration of gravity in the direction of length are small, and if the angle between the direction of length of the mobile terminal and the horizontal plane is greater than a preset angle and the angle between the direction of width of the mobile terminal and the horizontal plane is close to 0, switching the display screen of the mobile terminal to the portrait orientation;
if a value of the acceleration of gravity of the mobile terminal in the direction of width is close to 0 and a value of the acceleration of gravity in the direction of length is close to -9.8, switching the display screen of the mobile terminal to the landscape orientation;
if the value of the acceleration of gravity of the mobile terminal in the direction of length is close to 0 and the value of the acceleration of gravity in the direction of width is close to 9.8, switching the display screen of the mobile terminal to the portrait orientation;
if the value of the acceleration of gravity of the mobile terminal in the direction of width is close to 0 and the value of the acceleration of gravity in the direction of length is close to 9.8, switching the display screen of the mobile terminal to the landscape orientation; and
if the value of the acceleration of gravity of the mobile terminal in the direction of length is close to 0 and the value of the acceleration of gravity in the direction of width is close to -9.8, switching the display screen of the mobile terminal to the portrait orientation.

2. The method for switching a touch screen of a mobile terminal between a landscape orientation and a portrait orientation according to claim 1, wherein if determining that the operation mode of the mobile terminal is a recumbent operation mode, the method further comprises:
displaying at least one holding area on the touch screen of the mobile terminal.

3. The method for switching a touch screen of a mobile terminal between a landscape orientation and a portrait orientation according to claim 2, wherein when there are multiple holding areas and any one of the multiple holding areas is not held by a user, all the holding areas are displayed; when there are multiple holding areas and any one of the multiple areas is held by the user, other areas not held by the user are not displayed.

4. The method for switching a touch screen of a mobile terminal between a landscape orientation and a portrait orientation according to claim 2, wherein when there are multiple holding areas, an area held by the user moves along with movement of a position held by the user.

5. A mobile terminal, comprising:
an operation mode determining module (41), configured to: according to a value of acceleration of gravity in a direction vertical to a screen of the mobile terminal, determine whether an operation mode of the mobile terminal is a normal operation mode or a recumbent operation mode; the normal operation mode is a mode in which the value of the acceleration of gravity in the direction perpendicular to the screen of the mobile terminal is smaller than 0, and the recumbent operation mode as a mode in which the value of the acceleration of gravity in the direction perpendicular to the screen of the mobile terminal is greater than or equal to 0;
a switching criterion determining module (42), configured to determine, according to a determined operation mode, a criterion for switching between a landscape orientation and a portrait orientation; and
a switching module (43), configured to perform the switching between a landscape orientation and a portrait orientation according to the criterion;
wherein the switching criterion determining module (42) is configured to: if the operation mode is the recumbent operation mode, determine that the criterion for switching between a landscape orientation and a portrait orientation is a criterion in the recumbent operation mode;
wherein the switching module (43) is configured to:
if a value of the acceleration of gravity of the mobile terminal in the direction of width and a value of the acceleration of gravity in the direction of length are small, and if an angle between a direction of width of the mobile terminal and a horizontal plane is greater than a preset angle and an angle between a direction of length of the mobile terminal and the horizontal plane is close 0, switch a display screen of the mobile terminal to the landscape orientation; and
if a value of the acceleration of gravity of the mobile terminal in the direction of width and a value of the acceleration of gravity in the direction of length are small, and if the angle between the direction of length of the mobile terminal and the horizontal plane is greater than a preset angle and the angle between the direction of width of the mobile terminal and the horizontal plane is close to 0, switch the display screen of the mobile terminal to the portrait orientation;
if a value of the acceleration of gravity of the mobile terminal in the direction of width is close to 0 and a value of the acceleration of gravity in the direction of length is close to -9.8, switch the display screen of the mobile terminal to the landscape orientation;
if the value of the acceleration of gravity of the mobile terminal in the direction of length is close to 0 and the value of the acceleration of gravity in the direction of width is close to 9.8, switch the display screen of the mobile terminal to the portrait orientation;
if the value of the acceleration of gravity of the mobile terminal in the direction of width is close to 0 and the value of the acceleration of gravity in the direction of length is close to 9.8, switch the display screen of the mobile terminal to the landscape orientation; and
if the value of the acceleration of gravity of the mobile terminal in the direction of length is close to 0 and the value of the acceleration of gravity in the direction of width is close to -9.8, switch the display screen of the mobile terminal to the portrait orientation.

6. The mobile terminal according to claim 5, further comprising:
a controlling module (44) for displaying of a holding area, configured to: if the operation mode determining module determines that the operation mode of the mobile terminal is a recumbent operation mode, display at least one holding area on the touch screen of the mobile terminal.

7. The mobile terminal according to claim 6, wherein the controlling module (44) for displaying of a holding area comprises a first submodule of the controlling module for displaying of a holding area, configured to: when there are multiple holding areas and any one of the holding areas is not held by a user, display all holding areas; and when there are multiple holding areas and any one of the holding areas is held, stop displaying the holding areas not held by the user.

8. The mobile terminal according to claim 6, wherein the controlling module (44) for displaying of a holding area comprises a second submodule of the controlling module for displaying of a holding area, configured to control an area held by a user among the multiple holding areas, so that the area moves along with movement of a position held by the user.

## Patentansprüche

1. Verfahren zum Umschalten eines Berührungsschirms eines mobilen Endgeräts zwischen einer Landschaftsorientierung und einer Porträtorientierung, wobei das Verfahren Folgendes umfasst:
gemäß einem Wert der Gravitationsbeschleunigung in einer Richtung senkrecht zu einem Schirm des mobilen Endgeräts Bestimmen (11), ob ein Betriebsmodus des mobilen Endgeräts ein normaler Betriebsmodus oder ein Modus des liegenden Betriebs ist; wobei der normale Betriebsmodus ein Modus ist, bei dem der Wert der Gravitationsbeschleunigung in der Richtung vertikal zum Schirm des mobilen Endgeräts kleiner als 0 ist, und der Modus des liegenden Betriebs ein Modus ist, bei dem der Wert der Gravitationsbeschleunigung in der Richtung vertikal zum Schirm des mobilen Endgeräts größer als oder gleich 0 ist; wobei das Verfahren ferner **gekennzeichnet ist durch**:
Bestimmen (12) gemäß einem bestimmten Betriebsmodus eines Kriteriums zum Umschalten zwischen einer Landschaftsorientierung und einer Porträtorientierung; und
Ausführen (13) des Umschaltens zwischen einer Landschaftsorientierung und einer Porträtorientierung gemäß dem Kriterium;
wobei das Bestimmen gemäß einem bestimmten Betriebsmodus eines Kriteriums zum Umschalten zwischen einer Landschaftsorientierung und einer Porträtorientierung Folgendes umfasst:
falls der Betriebsmodus der Modus des liegenden Betriebs ist, Bestimmen, dass das Kriterium zum Umschalten zwischen einer Landschaftsorientierung und einer Porträtorientierung ein Kriterium im Modus des liegenden Betriebs ist;
wobei das Ausführen des Umschaltens zwischen einer Landschaftsorientierung und einer Porträtorientierung gemäß dem Kriterium Folgendes umfasst:
falls ein Wert der Gravitationsbeschleunigung des mobilen Endgeräts in der Richtung der Breite und ein Wert der Gravitationsbeschleunigung in der Richtung der Länge klein sind und falls ein Winkel zwischen einer Richtung der Breite des mobilen Endgeräts und einer horizontalen Ebene größer als ein vorgegebener Winkel ist und sich ein Winkel zwischen einer Richtung der Länge des mobilen Endgeräts und der horizontalen Ebene nah bei 0 befindet, Umschalten eines Anzeigeschirms des mobilen Endgeräts zur Landschaftsorientierung;
falls ein Wert der Gravitationsbeschleunigung des mobilen Endgeräts in der Richtung der Breite und ein Wert der Gravitationsbeschleunigung in der Richtung der Länge klein sind und falls der Winkel zwischen der Richtung der Länge des mobilen Endgeräts und der horizontalen Ebene größer als ein vorgegebener Winkel ist und sich der Winkel zwischen der Richtung der Breite des mobilen Endgeräts und der horizontalen Ebene nah bei 0 befindet, Umschalten des Anzeigeschirms des mobilen Endgeräts zur Porträtorientierung;
falls sich ein Wert der Gravitationsbeschleunigung des mobilen Endgeräts in der Richtung der Breite nah bei 0 befindet und sich ein Wert der Gravitationsbeschleunigung in der Richtung der Länge nah bei -9,8 befindet, Umschalten des Anzeigeschirms des mobilen Endgeräts zur Landschaftsorientierung;
falls sich der Wert der Gravitationsbeschleunigung des mobilen Endgeräts in der Richtung der Länge nah bei 0 befindet und sich der Wert der Gravitationsbeschleunigung in der Richtung der Breite nah bei 9,8 befindet, Umschalten des Anzeigeschirms des mobilen Endgeräts zur Porträtorientierung;
falls sich der Wert der Gravitationsbeschleunigung des mobilen Endgeräts in der Richtung der Breite nah bei 0 befindet und sich der Wert der Gravitationsbeschleunigung in der Richtung der Länge nah bei 9,8 befindet, Umschalten des Anzeigeschirms des mobilen Endgeräts zur Landschaftsorientierung; und
falls sich der Wert der Gravitationsbeschleunigung des mobilen Endgeräts in der Richtung der Länge nah bei 0 befindet und sich der Wert der Gravitationsbeschleunigung in der Richtung der Breite nah bei -9,8 befindet, Umschalten des Anzeigeschirms des mobilen Endgeräts zur Porträtorientierung.

2. Verfahren zum Umschalten eines Berührungsschirms eines mobilen Endgeräts zwischen einer Landschaftsorientierung und einer Porträtorientierung nach Anspruch 1, wobei, falls bestimmt wird, dass der Betriebsmodus des mobilen Endgeräts ein Modus des liegenden Betriebs ist, das Verfahren ferner Folgendes umfasst:
Anzeigen wenigstens eines Haltebereichs auf dem Berührungsschirm des mobilen Endgeräts.

3. Verfahren zum Umschalten eines Berührungsschirms eines mobilen Endgeräts zwischen einer Landschaftsorientierung und einer Porträtorientierung nach Anspruch 2, wobei, wenn es mehrere Haltebereiche gibt und irgendeiner der mehreren Haltebereiche nicht durch einen Anwender gehalten wird, alle Haltebereiche angezeigt werden; und wenn es mehrere Haltebereiche gibt und irgendeiner der mehreren Haltebereiche durch den Anwender gehalten wird, die anderen Bereiche, die nicht durch den Anwender gehalten werden, nicht angezeigt werden.

4. Verfahren zum Umschalten eines Berührungsschirms eines mobilen Endgeräts zwischen einer Landschaftsorientierung und einer Porträtorientierung nach Anspruch 2, wobei, wenn es mehrere Haltebereiche gibt, sich ein durch den Anwender gehaltener Bereich zusammen mit der Bewegung einer durch den Anwender gehaltenen Position bewegt.

5. Mobiles Endgerät, das Folgendes umfasst:
ein Betriebsmodus-Bestimmungsmodul (41), das konfiguriert ist: gemäß einem Wert der Gravitationsbeschleunigung in einer Richtung vertikal zu einem Schirm des mobilen Endgeräts zu bestimmen, ob ein Betriebsmodus des mobilen Endgeräts ein normaler Betriebsmodus oder ein Modus des liegenden Betriebs ist; wobei der normale Betriebsmodus ein Modus ist, bei dem der Wert der Gravitationsbeschleunigung in der Richtung senkrecht zum Schirm des mobilen Endgeräts kleiner als 0 ist, und der Modus des liegenden Betriebs ein Modus ist, bei dem der Wert der Gravitationsbeschleunigung in der Richtung senkrecht zum Schirm des mobilen Endgeräts größer als oder gleich 0 ist;
ein Umschaltkriterium-Bestimmungsmodul (42), das konfiguriert ist, gemäß einem bestimmten Betriebsmodus ein Kriterium zum Umschalten zwischen einer Landschaftsorientierung und einer Porträtorientierung zu bestimmen; und
ein Umschaltmodul (43), das konfiguriert ist, das Umschalten zwischen einer Landschaftsorientierung und einer Porträtorientierung gemäß dem Kriterium auszuführen;
wobei das Umschaltkriterium-Bestimmungsmodul (42) konfiguriert ist: falls der Betriebsmodus der Modus des liegenden Betriebs ist, zu bestimmen, dass das Kriterium zum Umschalten zwischen einer Landschaftsorientierung und einer Porträtorientierung ein Kriterium im Modus des liegenden Betriebs ist;
wobei das Umschaltmodul (43) konfiguriert ist:
falls ein Wert der Gravitationsbeschleunigung des mobilen Endgeräts in der Richtung der Breite und ein Wert der Gravitationsbeschleunigung in der Richtung der Länge klein sind und falls ein Winkel zwischen einer Richtung der Breite des mobilen Endgeräts und einer horizontalen Ebene größer als ein vorgegebener Winkel ist und sich ein Winkel zwischen einer Richtung der Länge des mobilen Endgeräts und der horizontalen Ebene nah bei 0 befindet, einen Anzeigeschirm des mobilen Endgeräts zur Landschaftsorientierung umzuschalten;
falls ein Wert der Gravitationsbeschleunigung des mobilen Endgeräts in der Richtung der Breite und ein Wert der Gravitationsbeschleunigung in der Richtung der Länge klein sind und falls der Winkel zwischen der Richtung der Länge des mobilen Endgeräts und der horizontalen Ebene größer als ein vorgegebener Winkel ist und sich der Winkel zwischen der Richtung der Breite des mobilen Endgeräts und der horizontalen Ebene nah bei 0 befindet, den Anzeigeschirm des mobilen Endgeräts zur Porträtorientierung umzuschalten;
falls sich ein Wert der Gravitationsbeschleunigung des mobilen Endgeräts in der Richtung der Breite nah bei 0 befindet und sich ein Wert der Gravitationsbeschleunigung in der Richtung der Länge nah bei -9,8 befindet, den Anzeigeschirm des mobilen Endgeräts zur Landschaftsorientierung umzuschalten;
falls sich der Wert der Gravitationsbeschleunigung des mobilen Endgeräts in der Richtung der Länge nah bei 0 befindet und sich der Wert der Gravitationsbeschleunigung in der Richtung der Breite nah bei 9,8 befindet, den Anzeigeschirm des mobilen Endgeräts zur Porträtorientierung umzuschalten;
falls sich der Wert der Gravitationsbeschleunigung des mobilen Endgeräts in der Richtung der Breite nah bei 0 befindet und sich der Wert der Gravitationsbeschleunigung in der Richtung der Länge nah bei 9,8 befindet, den Anzeigeschirm des mobilen Endgeräts zur Landschaftsorientierung umzuschalten; und
falls sich der Wert der Gravitationsbeschleunigung des mobilen Endgeräts in der Richtung der Länge nah bei 0 befindet und sich der Wert der Gravitationsbeschleunigung in der Richtung der Breite nah bei -9,8 befindet, den Anzeigeschirm des mobilen Endgeräts zur Porträtorientierung umzuschalten.

6. Mobiles Endgerät nach Anspruch 5, das ferner Folgendes umfasst:
ein Steuermodul (44) zum Anzeigen eines Haltebereichs, das konfiguriert ist: falls das Betriebsmodus-Bestimmungsmodul bestimmt, dass der Betriebsmodus des mobilen Endgeräts ein Modus des liegenden Betriebs ist, wenigstens einen Haltebereich auf dem Berührungsschirm des mobilen Endgeräts anzuzeigen.

7. Mobiles Endgerät nach Anspruch 6, wobei das Steuermodul (44) zum Anzeigen eines Haltebereichs ein erstes Untermodul des Steuermoduls zum Anzeigen eines Haltebereichs umfasst, das konfiguriert ist: wenn es mehrere Haltebereiche gibt und irgendeiner der mehreren Haltebereiche nicht durch einen Anwender gehalten wird, alle Haltebereiche anzuzeigen; und wenn es mehrere Haltebereiche gibt und irgendeiner der mehreren Haltebereiche gehalten wird, das Anzeigen der Haltebereiche, die nicht durch den Anwender gehalten werden, zu stoppen.

8. Mobiles Endgerät nach Anspruch 6, wobei das Steuermodul (44) zum Anzeigen eines Haltebereichs ein zweites Untermodul des Steuermoduls zum Anzeigen eines Haltebereichs umfasst, das konfiguriert ist, einen durch einen Anwender gehaltenen Bereich unter den mehreren Haltebereichen zu steuern, so dass sich der Bereich zusammen mit der Bewegung einer durch den Anwender gehaltenen Position bewegt.

## Revendications

1. Procédé pour le basculement d'un écran tactile d'un terminal mobile entre une orientation paysage et une orientation portrait, comprenant :
en fonction d'une valeur de l'accélération de la pesanteur dans une direction perpendiculaire à un écran du terminal mobile, la détermination (11) du fait de savoir si un mode de fonctionnement du terminal mobile est un mode de fonctionnement normal ou un mode de fonctionnement couché ; le mode de fonctionnement normal est un mode dans lequel la valeur de l'accélération de la pesanteur dans la direction perpendiculaire à l'écran du terminal mobile est inférieure à 0, et le mode de fonctionnement couché est un mode dans lequel la valeur de l'accélération de la pesanteur dans la direction perpendiculaire à l'écran du terminal mobile est supérieure ou égale à 0 ; le procédé étant en outre **caractérisé par** :
la détermination (12), conformément à un mode de fonctionnement déterminé, d'un critère de basculement entre une orientation paysage et une orientation portrait ; et
l'exécution (13) du basculement entre une orientation paysage et une orientation portrait conformément au critère ;
dans lequel la détermination, conformément à un mode de fonctionnement déterminé, d'un critère de basculement entre une orientation paysage et une orientation portrait comprend :
si le mode de fonctionnement est le mode de fonctionnement couché, la détermination du fait que le critère de basculement entre une orientation paysage et une orientation portrait est un critère de mode de fonctionnement couché ;
dans lequel l'exécution du basculement entre une orientation paysage et une orientation portrait conformément au critère comprend :
si une valeur de l'accélération de la pesanteur du terminal mobile dans la direction de la largeur et une valeur de l'accélération de la pesanteur dans la direction de la longueur sont faibles, et si un angle entre une direction de la largeur du terminal mobile et un plan horizontal est supérieur à un angle prédéfini et un angle entre une direction de la longueur du terminal mobile et le plan horizontal est proche de 0, le basculement d'un écran d'affichage du terminal mobile à l'orientation paysage ;
si une valeur de l'accélération de la pesanteur du terminal mobile dans la direction de la largeur et une valeur de l'accélération de la pesanteur dans la direction de la longueur sont faibles, et si l'angle entre la direction de la longueur du terminal mobile et le plan horizontal est supérieur à un angle prédéfini et l'angle entre la direction de la largeur du terminal mobile et le plan horizontal est proche de 0, le basculement de l'écran d'affichage du terminal mobile à l'orientation portrait ;
si une valeur de l'accélération de la pesanteur du terminal mobile dans la direction de la largeur est proche de 0 et une valeur de l'accélération de la pesanteur dans la direction de la longueur est proche de -9,8, le basculement de l'écran d'affichage du terminal mobile à l'orientation paysage ;
si la valeur de l'accélération de la pesanteur du terminal mobile dans la direction de la longueur est proche de 0 et la valeur de l'accélération de la pesanteur dans la direction de la largeur est proche de 9,8, le basculement de l'écran d'affichage du terminal mobile à l'orientation portrait ;
si la valeur de l'accélération de la pesanteur du terminal mobile dans la direction de la largeur est proche de 0 et la valeur de l'accélération de la pesanteur dans la direction de la longueur est proche de 9,8, le basculement de l'écran d'affichage du terminal mobile à l'orientation paysage ; et
si la valeur de l'accélération de la pesanteur du terminal mobile dans la direction de la longueur est proche de 0 et la valeur de l'accélération de la pesanteur dans la direction de la largeur est proche de -9,8, le basculement de l'écran d'affichage du terminal mobile à l'orientation portrait.

2. Procédé pour le basculement d'un écran tactile d'un terminal mobile entre une orientation paysage et une orientation portrait selon la revendication 1, dans lequel, si la détermination du fait que le mode de fonctionnement du terminal mobile est un mode de fonctionnement couché, le procédé comprend en outre :
l'affichage d'au moins une zone de maintien sur l'écran tactile du terminal mobile.

3. Procédé pour le basculement d'un écran tactile d'un terminal mobile entre une orientation paysage et une orientation portrait selon la revendication 2, dans lequel, lorsqu'il existe de multiples zones de maintien et l'une quelconque des multiples zones de maintien n'est pas maintenue par un utilisateur, toutes les zones de maintien sont affichées ; lorsqu'il existe de multiples zones de maintien et l'une quelconque des multiples zones est maintenue par l'utilisateur, d'autres zones non maintenues par l'utilisateur ne sont pas affichées.

4. Procédé pour le basculement d'un écran tactile d'un terminal mobile entre une orientation paysage et une orientation portrait selon la revendication 2, dans lequel, lorsqu'il existe de multiples zones de maintien, une zone maintenue par l'utilisateur se déplace en association avec le mouvement d'une position maintenue par l'utilisateur.

5. Terminal mobile, comprenant :
un module de détermination de mode de fonctionnement (41), configuré pour :
en fonction d'une valeur de l'accélération de la pesanteur dans une direction perpendiculaire à un écran du terminal mobile, déterminer si un mode de fonctionnement du terminal mobile est un mode de fonctionnement normal ou un mode de fonctionnement couché ; le mode de fonctionnement normal est un mode dans lequel la valeur de l'accélération de la pesanteur dans la direction perpendiculaire à l'écran du terminal mobile est inférieure à 0, et le mode de fonctionnement couché est un mode dans lequel la valeur de l'accélération de la pesanteur dans la direction perpendiculaire à l'écran du terminal mobile est supérieure ou égale à 0 ;
un module de détermination de critère de basculement (42), configuré pour déterminer, conformément à un mode de fonctionnement déterminé, un critère de basculement entre une orientation paysage et une orientation portrait ; et
un module de basculement (43), configuré pour exécuter le basculement entre une orientation paysage et une orientation portrait conformément au critère ;
dans lequel le module de détermination de critère de basculement (42) est configuré pour : si le mode de fonctionnement est le mode de fonctionnement couché, déterminer que le critère de basculement entre une orientation paysage et une orientation portrait est un critère de mode de fonctionnement couché ;
dans lequel le module de basculement (43) est configuré pour :
si une valeur de l'accélération de la pesanteur du terminal mobile dans la direction de la largeur et une valeur de l'accélération de la pesanteur dans la direction de la longueur sont faibles, et si un angle entre une direction de la largeur du terminal mobile et un plan horizontal est supérieur à un angle prédéfini et un angle entre une direction de la longueur du terminal mobile et le plan horizontal est proche de 0, provoquer le basculement d'un écran d'affichage du terminal mobile à l'orientation paysage ; et
si une valeur de l'accélération de la pesanteur du terminal mobile dans la direction de la largeur et une valeur de l'accélération de la pesanteur dans la direction de la longueur sont faibles, et si l'angle entre la direction de la longueur du terminal mobile et le plan horizontal est supérieur à un angle prédéfini et l'angle entre la direction de la largeur du terminal mobile et le plan horizontal est proche de 0, provoquer le basculement de l'écran d'affichage du terminal mobile à l'orientation portrait ;
si une valeur de l'accélération de la pesanteur du terminal mobile dans la direction de la largeur est proche de 0 et une valeur de l'accélération de la pesanteur dans la direction de la longueur est proche de -9,8, provoquer le basculement de l'écran d'affichage du terminal mobile à l'orientation paysage ;
si la valeur de l'accélération de la pesanteur du terminal mobile dans la direction de la longueur est proche de 0 et la valeur de l'accélération de la pesanteur dans la direction de la largeur est proche de 9,8, provoquer le basculement de l'écran d'affichage du terminal mobile à l'orientation portrait ;
si la valeur de l'accélération de la pesanteur du terminal mobile dans la direction de la largeur est proche de 0 et la valeur de l'accélération de la pesanteur dans la direction de la longueur est proche de 9,8, provoquer le basculement de l'écran d'affichage du terminal mobile à l'orientation paysage ; et
si la valeur de l'accélération de la pesanteur du terminal mobile dans la direction de la longueur est proche de 0 et la valeur de l'accélération de la pesanteur dans la direction de la largeur est proche de -9,8, provoquer le basculement de l'écran d'affichage du terminal mobile à l'orientation portrait.

6. Terminal mobile selon la revendication 5, comprenant en outre :
un module de commande (44) destiné à afficher une zone de maintien, configuré pour : si le module de détermination de mode de fonctionnement détermine que le mode de fonctionnement du terminal mobile est un mode de fonctionnement couché, afficher au moins une zone de maintien sur l'écran tactile du terminal mobile.

7. Terminal mobile selon la revendication 6, dans lequel le module de commande (44) destiné à afficher une zone de maintien comprend un premier sous-module du module de commande pour l'affichage d'une zone de maintien, configuré pour :
lorsqu'il existe de multiples zones de maintien et l'une quelconque des zones de maintien n'est pas maintenue par un utilisateur, afficher les zones de maintien ; et
lorsqu'il existe de multiples zones de maintien et l'une quelconque des zones de maintien est maintenue, arrêter l'affichage des zones de maintien non maintenues par l'utilisateur.

8. Terminal mobile selon la revendication 6, dans lequel le module de commande (44) destiné à afficher une zone de maintien comprend un deuxième sous-module du module de commande pour l'affichage d'une zone de maintien, configuré pour commander une zone maintenue par un utilisateur parmi les multiples zones de maintien, de manière à ce que la zone se déplace en association avec le mouvement d'une position maintenue par l'utilisateur.
